# EUROPEAN PATENT APPLICATION

(11) **EP 4 848 828 A1**
(43) Date of publication of application: **02.12.2026**
(21) Application number: 24919243.6
(22) Date of filing: 23.01.2024
(51) Int. Cl.: H04W 52/02

(54) **COMMUNICATION METHOD, TERMINAL, NETWORK DEVICE, SYSTEM, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2024/073716
(87) International publication number: WO 2025/156125

(57) **Abstract**

The present disclosure relates to a communication method, a terminal, a network device, a system, and a storage medium. The method comprises: receiving first indication information sent by a network device, wherein the first indication information is used for indicating whether a terminal uses a low-power receiver (LR) to execute RRM measurement of a neighboring cell. In the method of the present disclosure, a terminal learns, by means of receiving first indication information, whether a network device configures the terminal to use an LR to execute RRM measurement of a neighboring cell, such that the terminal can rationally use, on the basis of the configuration of the network device, the LR to execute allowed measurement, thereby reducing the energy consumption of the terminal.

## Description

### TECHNICAL FIELD

The present disclosure relates to the field of communication technologies, and in particular, to a communication method, a terminal, a network device, a communication system and a storage medium.

### BACKGROUND

A terminal may be equipped with a Main Radio (MR) and a Low-Power Wake Up Receiver (LP WUR or LR). In some scenarios, the terminal may put the MR into a sleep state, and use the LR to monitor Low-Power Wake Up Signals (LP WUS). Upon detecting an LP WUS targeted for the terminal, the terminal wakes up or activates the MR for data transmission, so as to reduce power consumption of the MR.

### SUMMARY

A problem to be solved is how to perform measurements by using the LR of a terminal.

Embodiments of the present disclosure provide a communication method, a terminal, a network device, a communication system and a storage medium.

In a first aspect, an embodiment of the present disclosure provides a communication method performed by a terminal. The method includes:
receiving first indication information sent by a network device, wherein the first indication information indicates whether the terminal uses a low-power wake up receiver (LR) to perform a radio resource management (RRM) measurement on a neighboring cell.

In a second aspect, an embodiment of the present disclosure provides a communication method performed by a network device. The method includes:
sending first indication information to a terminal, wherein the first indication information indicates whether the terminal uses an LR to perform an RRM measurement on the neighboring cell.

In a third aspect, an embodiment of the present disclosure provides a terminal, including:
a transceiver module, configured to receive first indication information sent by a network device, wherein the first indication information indicates whether the terminal uses a low-power wake up receiver (LR) to perform an RRM measurement on a neighboring cell.

In a fourth aspect, an embodiment of the present disclosure provides a network device, including:
a transceiver module, configured to send first indication information to a terminal, wherein the first indication information indicates whether the terminal uses an LR to perform an RRM measurement on a neighboring cell.

In a fifth aspect, an embodiment of the present disclosure provides a terminal, including:
one or more processors,
wherein the terminal is configured to implement the method according to the first aspect.

In a sixth aspect, an embodiment of the present disclosure provides a network device, including:
one or more processors,
wherein the network device is configured to implement the method according to the second aspect.

In a seventh aspect, an embodiment of the present disclosure provides a communication system including a terminal and a network device. The terminal is configured to perform the method according to the first aspect, and the network device is configured to perform the method according to the second aspect.

In an eighth aspect, an embodiment of the present disclosure provides a storage medium storing instructions therein. When the instructions are executed on a communication device, the communication device is caused to perform the method according to the first aspect or the second aspect.

In a ninth aspect, an embodiment of the present disclosure provides a program product. When the program product is executed by a communication device, the communication device is caused to perform the method according to the first aspect or the second aspect.

In the embodiments of the present disclosure, the terminal receives the first indication information to learn whether the network device configures the terminal to use the LR to perform the RRM measurement on the neighboring cell. Accordingly, the terminal can reasonably utilize the LR to execute authorized measurements based on the configuration from the network device, thereby saving power consumption of the terminal.

### BRIEF DESCRIPTION OF THE DRAWINGS

To more clearly illustrate the technical solutions in the embodiments of the present disclosure, the accompanying drawings required for describing the embodiments are introduced as follows. The following accompanying drawings merely show some embodiments of the present disclosure and do not impose specific limitations on the protection scope of the present disclosure.
FIG. 1 is an exemplary schematic diagram of an architecture of a communication system according to an embodiment of the present disclosure;
FIG. 2a and FIG. 2b are exemplary interaction schematic diagrams of a method according to an embodiment of the present disclosure;
FIG. 3a, FIG. 3b and FIG. 3c are exemplary flowcharts of a method according to an embodiment of the present disclosure;
FIG. 4a, FIG. 4b and FIG. 4c are exemplary flowcharts of a method according to an embodiment of the present disclosure;
FIG. 5a is a schematic structural diagram of a terminal according to an embodiment of the present disclosure;
FIG. 5b is a schematic structural diagram of a network device according to an embodiment of the present disclosure;
FIG. 6a is a schematic diagram of a communication device according to an embodiment of the present disclosure; and
FIG. 6b is a schematic diagram of a communication device according to an embodiment of the present disclosure.

### DETAILED DESCRIPTION

Embodiments of the present disclosure provide a communication method, a terminal, a network device, a system and a storage medium.

In a first aspect, embodiments of the present disclosure provide a communication method performed by a terminal. The method includes:
receiving first indication information sent by a network device, wherein the first indication information indicates whether the terminal uses a low-power wake up receiver (LR) to perform an RRM measurement on a neighboring cell.

In the above embodiments, by receiving the first indication information, the terminal learns whether the network device configures the terminal to use the LR to perform the RRM measurement on the neighboring cell, so that the terminal can reasonably utilize the LR to perform allowed measurements based on the configuration of the network device, and save power consumption of the terminal.

In conjunction with the embodiments of the first aspect, in some embodiments, the method further includes:
receiving second indication information sent by the network device, wherein the second indication information indicates a reference signal used for the RRM measurement; or
the reference signal used for the RRM measurement is defined by a protocol;
wherein the reference signal includes at least one of a Low Power Synchronization Signal (LP-SS), a primary synchronization signal (PSS), or a secondary synchronization signal (SSS).

In the above embodiments, the terminal may learn the reference signal adopted when performing neighboring cell measurement via the LR through the indication of the network device or protocol definition, so that the terminal may measure the reference signal at an appropriate time.

In conjunction with the embodiments of the first aspect, in some embodiments, the LR is an on-off keying (OOK) LR supporting processing a binary OOK signal, or an orthogonal frequency division multiplexing (OFDM) LR supporting processing an OFDM modulated signal.

In the above embodiments, terminals with different LR types have different signal processing capabilities, and perform measurements based on corresponding reference signals and the LR capability of the terminal.

In conjunction with the embodiments of the first aspect, in some embodiments, the first indication information indicates at least one of:
a terminal with an OOK LR performing an LP-SS-based RRM measurement;
a terminal with an OFDM LR performing the LP-SS-based RRM measurement; or
the terminal with the OFDM LR performing a PSS or SSS-based RRM measurement.

In the above embodiments, the first indication information may separately indicate measurement modes of terminals with different LRs, and a terminal with a corresponding LR may perform a corresponding measurement based on its own LR.

In conjunction with the embodiments of the first aspect, in some embodiments, a frequency supported by the OFDM LR includes a frequency of the PSS or a frequency of the SSS.

In the above embodiments, the PSS or the SSS may be on a plurality of frequencies defined by the protocol. The frequencies supported by the OFDM LR of the terminal include the frequency of the PSS or the frequency of the SSS, so that the PSS or the SSS can be detected to facilitate the PSS or SSS-based measurement.

In conjunction with the embodiments of the first aspect, in some embodiments, when the terminal is in a Radio Resource Control (RRC) idle state or an inactive state, the first indication information indicates that the terminal with the OOK LR performs the LP-SS-based RRM measurement, or that the terminal with the OFDM LR performs the LP-SS-based RRM measurement.

In the above embodiments, the network device indicates, through the first indication information, that the terminal in the RRC idle state or inactive state performs the LP-SS-based measurement via the LR. For example, if a terminal in the RRC connected state performs the LP-SS-based measurement, the terminal may perform frequency domain switching between its active Bandwidth Part (BWP) and the frequency of the LP-SS, which can be specifically referred to the description of the following embodiments.

In conjunction with the embodiments of the first aspect, in some embodiments, the method further includes:
receiving third indication information sent by the network device, wherein the third indication information indicates cell information of at least one neighboring cell to be measured by the LR, and the cell information includes at least one of a cell identifier, a cell index, a cell frequency point.

In the above embodiments, based on the third indication information, the terminal obtains cell information of a neighboring cell to be measured delivered by the network device, so that the terminal may measure the neighboring cells corresponding to the cell information via the LR.

In conjunction with the embodiments of the first aspect, in some embodiments, the method further includes:
performing the RRM measurement on the neighboring cell by using the LR, wherein the first indication information indicates that the terminal uses the LR to perform the RRM measurement; or
performing the RRM measurement on the neighboring cell by using a main receiver (MR), wherein the first indication information indicates that the terminal does not use the LR to perform the RRM measurement.

In the above embodiments, when the first indication information indicates that the terminal uses the LR to perform the measurement, the terminal may perform the measurement via the LR to improve the power saving effect of the terminal.

In conjunction with the embodiments of the first aspect, in some embodiments, the method further includes:
receiving fourth indication information sent by the network device, wherein the fourth indication information indicates whether the terminal uses an MR to perform the RRM measurement on the neighboring cell while performing the RRM measurement on the neighboring cell by using the LR.

In the above embodiments, based on the fourth indication information, the terminal learns the measurement mode indicated by the network device, which facilitates performing accompanying measurement via the MR at an appropriate time during the LR measurement process and thus improves measurement accuracy.

In conjunction with the embodiments of the first aspect, in some embodiments, a measurement period for performing the RRM measurement on the neighboring cell by using the MR is greater than a measurement period for performing the RRM measurement on the neighboring cell by using the LR.

In the above embodiments, the measurement performed by the terminal via the MR indicated by the fourth indication information is relaxed measurement, that is, the measurement is performed within a longer period, so as to save power consumption of the MR.

In conjunction with the embodiments of the first aspect, in some embodiments, the measurement period for the RRM measurement performed by the MR is N times the measurement period for the RRM measurement performed by the LR. Alternatively, the measurement period for the RRM measurement performed by the MR which is accompanied when the LR performs the RRM measurement is N times the measurement period for the normal RRM measurement performed by only the MR in which the LR does not perform the RRM measurement, where N is greater than 1. Optionally, N is configured by the network device 102 or defined by a protocol.

In conjunction with the embodiments of the first aspect, in some embodiments, the method further includes:
performing the RRM measurement on the neighboring cell by using the MR during the RRM measurement on the neighboring cell performed by using the LR; or
performing the RRM measurement on the neighboring cell by using the MR when a measurement result of the RRM measurement on the neighboring cell performed by using the LR is below a threshold value.

In the above embodiments, the terminal may utilize the LR for measurement and adopt the MR for relaxed measurement, which reduces power consumption of the MR while improving accuracy of measurement results.

In conjunction with the embodiments of the first aspect, in some embodiments, the method further includes:
sending capability information to the network device, wherein the capability information indicates a capability of the terminal to perform the RRM measurement on the neighboring cell by using the LR.

In the above embodiments, the terminal reports its own capability of performing measurement via the LR to the network device through the capability information, so that the network device may perform reasonable configuration or scheduling according to the capability of the terminal.

In conjunction with the embodiments of the first aspect, in some embodiments, the capability includes at least one of:
a first capability of performing an LP-SS-based RRM measurement on the neighboring cell by using an OOK LR;
a second capability of performing the LP-SS-based RRM measurement on the neighboring cell by using an OFDM LR; or
a third capability of performing a PSS- or SSS-based RRM measurement on the neighboring cell by using the OFDM LR.

In the above embodiments, different terminals have different capabilities of performing measurement via the LR. Reporting the capability information facilitates the network device to perform reasonable configuration for terminals with different capabilities.

In conjunction with the embodiments of the first aspect, in some embodiments, the neighboring cell is an intra-frequency neighboring cell or an inter-frequency neighboring cell of a serving cell of the terminal.

In the above embodiments, the neighboring cell on which the measurement is performed by the terminal via the LR indicated by the first indication information may be either an intra-frequency neighboring cell or an inter-frequency neighboring cell, which helps save power consumption of the MR under different measurement scenarios.

In conjunction with the embodiments of the first aspect, in some embodiments, the first indication information is sent via broadcast information or via UE-specific signaling.

In the above embodiments, for terminals in different states, the network device may deliver the first indication information through corresponding signaling to instruct the terminal to perform measurement via the LR and save power consumption of the MR. For example, for a terminal in the RRC idle state or inactive state, the first indication information may be sent via broadcast information; and for a terminal in the RRC connected state, the first indication information may be sent via UE-specific signaling.

In a second aspect, embodiments of the present disclosure provide a communication method performed by a network device. The method includes:
sending first indication information to a terminal, wherein the first indication information indicates whether the terminal uses an LR to perform an RRM measurement on a neighboring cell.

In conjunction with the embodiments of the second aspect, in some embodiments, the method further includes:
sending second indication information to the terminal, wherein the second indication information indicates a reference signal used for the RRM measurement; or
the reference signal used for the RRM measurement is defined by a protocol;
wherein the reference signal includes at least one of LP-SS, PSS, or SSS.

In conjunction with the embodiments of the second aspect, in some embodiments, the LR is an OOK LR supporting processing an OOK signal, or an orthogonal frequency division multiplexing (OFDM) LR supporting processing an OFDM modulated signal.

In conjunction with the embodiments of the second aspect, in some embodiments, the first indication information indicates at least one of:
a terminal with an OOK LR performing an LP-SS-based RRM measurement;
a terminal with an OFDM LR performing the LP-SS-based RRM measurement; or
the terminal with the OFDM LR performing a PSS or SSS-based RRM measurement.

In conjunction with the embodiments of the second aspect, in some embodiments, a frequency supported by the OFDM LR includes a frequency of the PSS or a frequency of the SSS.

In conjunction with the embodiments of the second aspect, in some embodiments, when the terminal is in an RRC idle state or an inactive state, the first indication information indicates that the terminal with the OOK LR performs the LP-SS-based RRM measurement, or that the terminal with the OFDM LR performs the LP-SS-based RRM measurement.

In conjunction with the embodiments of the second aspect, in some embodiments, the method further includes:
sending third indication information to the terminal, wherein the third indication information indicates cell information of at least one neighboring cell to be measured by the LR, and the cell information includes at least one of a cell identifier, a cell index, a cell frequency point.

In conjunction with the embodiments of the second aspect, in some embodiments, the method further includes:
sending fourth indication information to the terminal, wherein the fourth indication information indicates whether the terminal uses an MR to perform the RRM measurement on the neighboring cell while performing the RRM measurement on the neighboring cell by using the LR.

In conjunction with the embodiments of the second aspect, in some embodiments, a measurement period for performing the RRM measurement on the neighboring cell by using the MR is greater than a measurement period for performing the RRM measurement on the neighboring cell by using the LR.

In conjunction with the embodiments of the second aspect, in some embodiments, the method further includes:
receiving capability information sent by the terminal, wherein the capability information indicates a capability of the terminal to perform the RRM measurement on the neighboring cell by using the LR.

In conjunction with the embodiments of the second aspect, in some embodiments, the capability includes at least one of:
a first capability of performing an LP-SS-based RRM measurement on the neighboring cell by using an OOK LR;
a second capability of performing the LP-SS-based RRM measurement on the neighboring cell by using an OFDM LR; or
a third capability of performing a PSS- or SSS-based RRM measurement on the neighboring cell by using the OFDM LR.

In conjunction with the embodiments of the second aspect, in some embodiments, the neighboring cell is an intra-frequency neighboring cell or an inter-frequency neighboring cell of a serving cell of the terminal.

In conjunction with the embodiments of the second aspect, in some embodiments, the first indication information is sent via broadcast information or via UE-specific signaling.

In a third aspect, embodiments of the present disclosure provide a terminal, including:
a transceiver module, configured to receive first indication information sent by a network device, wherein the first indication information indicates whether the terminal uses a low-power wake up receiver (LR) to perform an RRM measurement on a neighboring cell.

In a fourth aspect, embodiments of the present disclosure provide a network device, including:
a transceiver module, configured to send first indication information to a terminal, wherein the first indication information indicates whether the terminal uses an LR to perform an RRM measurement on a neighboring cell.

In a fifth aspect, embodiments of the present disclosure provide a terminal, including:
one or more processors,
wherein the terminal is configured to implement the method according to the first aspect.

In a sixth aspect, embodiments of the present disclosure provide a network device, including:
one or more processors;
wherein the network device is configured to implement the method according to the second aspect.

In a seventh aspect, embodiments of the present disclosure provide a communication system, including a terminal and a network device, wherein:
the terminal is configured to execute the method according to the first aspect; and
the network device is configured to execute the method according to the second aspect.

In an eighth aspect, embodiments of the present disclosure provide a storage medium having instructions stored thereon, wherein:
when the instructions run on a communication device, the communication device is caused to execute the method according to the first aspect or the second aspect.

In a ninth aspect, embodiments of the present disclosure provide a program product. When the program product is executed by a communication device, the communication device is caused to execute the methods described in optional implementations of the first aspect and the second aspect.

In a tenth aspect, embodiments of the present disclosure provide a computer program. When the computer program runs on a computer, the computer is caused to execute the methods described in optional implementations of the first aspect and the second aspect.

In an eleventh aspect, embodiments of the present disclosure provide a chip or a chip system. The chip or the chip system includes processing circuitry configured to execute the methods described in optional implementations of the foregoing first aspect and the second aspect.

It can be understood that the foregoing terminal, network device, communication system, storage medium, program product, computer program, and chip or chip system are all configured to execute the methods provided by the embodiments of the present disclosure. Therefore, the beneficial effects achievable thereby may refer to the corresponding beneficial effects in the methods, which will not be repeated herein.

The embodiments of the present disclosure are not exhaustive, and are only illustrations of some embodiments, and do not serve as specific limitations on the protection scope of the present disclosure. Without contradiction, each step in an embodiment may be implemented as an independent embodiment, and steps may be combined arbitrarily. For example, a solution after removing some steps in an embodiment may also be implemented as an independent embodiment, and the order of the steps in an embodiment may be exchanged arbitrarily; in addition, optional implementations in an embodiment may be combined arbitrarily. Furthermore, the embodiments may be combined arbitrarily. For example, some or all steps of different embodiments may be combined arbitrarily, and an embodiment may be combined arbitrarily with optional implementations of other embodiments.

In the embodiments of the present disclosure, unless otherwise specified and logically conflicting, the terms and/or descriptions in the embodiments are consistent and may be mutually referenced, and technical features in different embodiments may be combined to form new embodiments according to their inherent logical relationships.

The terms used in the embodiments of the present disclosure are for the purpose of describing specific embodiments only, and are not intended to limit the present disclosure.

In the embodiments of the present disclosure, unless otherwise stated, an element expressed in a singular form, such as "a", "an", "the", "said", "above-mentioned", "foregoing", "this", and the like, may mean "one and only one", "one or more", "at least one", and the like. For example, when articles such as "a", "an", "the" in English are used in translation, a noun after the article may be understood as a singular expression or a plural expression.

In the embodiments of the present disclosure, "a plurality of" refers to two or more.

In some embodiments, terms such as "at least one of", "one or more", "a plurality of" and "multiple" may be used interchangeably.

In some embodiments, expressions such as "at least one of A or B", "A and/or B", "A in a case and B in another case", "in response to a case A and in response to another case B" may include the following technical solutions according to circumstances: in some embodiments, A (performing A independently of B); in some embodiments, B (performing B independently of A); in some embodiments, selectively performing from A and B (selectively performing A and B); and in some embodiments, both A and B (performing both A and B). The same applies when there are more branches such as A, B, C.

In some embodiments, expressions such as "A or B" may include the following technical solutions according to circumstances: in some embodiments, A (performing A independently of B); in some embodiments, B (performing B independently of A); and in some embodiments, selectively performing from A and B (selectively performing A and B). The same applies when there are more branches such as A, B, C.

Prefixes such as "first", "second" and the like in the embodiments of the present disclosure are only used to distinguish different described objects, and do not constitute limitations on the position, order, priority, quantity or content of the described objects. The description of the described objects refers to the context in the claims or the embodiments, and should not be unduly limited due to the use of prefixes. For example, if the described object is a "field", the ordinal numbers before "field" in "first field" and "second field" do not limit the position or order between the "fields"; "first" and "second" do not limit whether the modified "fields" are in the same message, nor limit the sequence of the "first field" and the "second field". For another example, if the described object is a "level", the ordinal numbers before "level" in "first level" and "second level" do not limit the priority between the "levels". For another example, the quantity of the described objects is not limited by the ordinal number, and may be one or more. Taking "first device" as an example, the quantity of "device" may be one or more. In addition, objects modified by different prefixes may be the same or different. For example, if the described object is a "device", the "first device" and the "second device" may be the same device or different device, and their types may be the same or different; for another example, if the described object is "information", the "first information" and the "second information" may be the same information or different information, and their contents may be the same or different.

In some embodiments, "comprising A", "including A", "for indicating A", "carrying A" may be interpreted as directly carrying A or indirectly indicating A.

In some embodiments, terms such as "in response to", "in response to determining", "in the case of", "when", "upon", "if", and the like may be replaced with each other.

In some embodiments, terms such as "greater than", "greater than or equal to", "not less than", "more than", "more than or equal to", "no less than", "higher than", "higher than or equal to", "not lower than", "above" and the like may be replaced with each other; and terms such as "less than", "less than or equal to", "not greater than", "fewer than", "fewer than or equal to", "no more than", "lower than", "lower than or equal to", "not higher than", "below" and the like may be replaced with each other.

In some embodiments, a device and an apparatus may be interpreted as physical or virtual, and their names are not limited to the names described in the embodiments, and in some cases, may be also understood as "equipment", "device", "circuit", "network element", "node", "function", "unit", "section", "system", "network", "chip", "chip system", "entity", "subject" and the like.

In some embodiments, the "network" may refer to a device included in the network, such as an access network device and a core network device.

In some embodiments, "access network device (AN device)" may also be referred to as "radio access network device (RAN device) ", "base station (BS) ", "radio base station", "fixed station", and in some embodiments, may be also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, "terminal" or "terminal device" may be referred to as "user equipment (UE)", "user terminal", "mobile station (MS)", "mobile terminal (MT) ", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, and the like.

In some embodiments, the acquisition of data, information, etc. may comply with national laws and regulations of the location.

In some embodiments, data, information, etc. may be acquired after obtaining user consent.

In addition, each element, each row, or each column in the tables of the embodiments of the present disclosure may be implemented as an independent embodiment, and any combination of elements, rows, or columns may also be implemented as an independent embodiment.

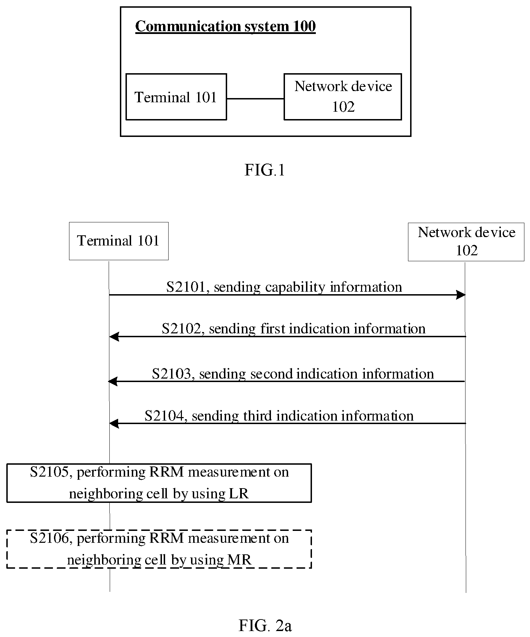

FIG. 1 is a schematic architectural diagram of a communication system according to an embodiment of the present disclosure.

As shown in FIG. 1, a communication system 100 includes a terminal 101 and a network device 102.

In some embodiments, the terminal 101 includes, for example, at least one of a mobile phone, a wearable device, an IoT device, a vehicle with communication function, an intelligent vehicle, a tablet computer (Pad), a computer with wireless transceiver function, a Virtual Reality (VR) terminal device, an Augmented Reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, but is not limited thereto.

In some embodiments, the network device 102 may include at least one of an access network device or a core network device.

In some embodiments, the access network device is, for example, a node or device for accessing a terminal to a wireless network. The access network device may include at least one of an evolved NodeB (eNB), a next generation eNB (ng-eNB), a next generation NodeB (gNB), a NodeB (NB), a home NodeB (HNB), a home evolved NodeB (HeNB), a wireless backhaul device, a Radio Network Controller (RNC), a Base Station Controller (BSC), a Base Transceiver Station (BTS), a Base Band Unit (BBU), and a mobile switching center in a 5G communication system, a base station in a 6G communication system, an Open RAN base station, a Cloud RAN base station, a base station in other communication systems, or an access node in a Wi-Fi system, but is not limited thereto.

In some embodiments, the technical solution of the present disclosure may be applicable to an Open RAN architecture. In this case, interfaces between access network devices or within an access network device involved in the embodiments of the present disclosure may be changed to internal interfaces of Open RAN, and processes and information interaction between these internal interfaces may be implemented through software or programs.

In some embodiments, the access network device may be composed of a Central Unit (CU) and a Distributed Unit (DU), wherein the CU may also be referred to as a control unit. The CU-DU structure may separate the protocol layers of the access network device, place functions of some protocol layers in the CU for centralized control, and distribute the remaining or all functions of the protocol layers in the DU, with the CU centrally controlling the DU, but is not limited thereto.

In some embodiments, the core network device may be a single device including one or more network elements, or a plurality of devices or device groups each including all or part of the one or more network elements. The network elements may be virtual or physical. The core network includes, for example, at least one of an Evolved Packet Core (EPC), a 5G Core Network (5GCN), or a Next Generation Core (NGC). Alternatively, the core network device refers to a network element with a specific function, such as an Access Management Function (AMF), a Service Management Function (SMF), and the like.

It can be understood that the communication system described in the embodiments of the present disclosure is to explain the technical solutions of the embodiments of the present disclosure more clearly, and does not constitute a limitation on the technical solutions proposed by the embodiments of the present disclosure. Those skilled in the art know that with the evolution of the system architecture and the emergence of new service scenarios, the technical solutions proposed by the embodiments of the present disclosure are also applicable to similar technical problems.

The following embodiments of the present disclosure may be applied to the communication system 100 shown in FIG. 1 or part of the subjects thereof, but are not limited thereto.

The subjects shown in FIG. 1 are exemplary, and the communication system may include all or part of the subjects in FIG. 1, or may include other subjects than those in FIG. 1. The quantity and form of each subject are arbitrary. The connection relationship between the subjects is exemplary, the subjects may be unconnected or connected, the connection may be in any manner, may be direct or indirect, and may be wired or wireless.

Various embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM^{®}), CDMA2000, Ultra Mobile Broadband (UMB), IEEE 802.11 (Wi-Fi^{®}), IEEE 802.16 (WiMAX^{®}), IEEE 802.20, Ultra-WideBand (UWB), Bluetooth^{®}, Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems extended based thereon, and the like. In addition, a combination of a plurality of systems (e.g., a combination of LTE or LTE-A and 5G, etc.) may also be applied.

In embodiments of the present disclosure, if the terminal 101 does not detect an LP-WUS corresponding to the terminal itself, or the detected LP-WUS indicates not to wake up an MR, the terminal 101 may keep the MR in a sleep state such as an Ultra-deep sleep state, so as to greatly reduce power consumption of the MR. In addition, the LP-WUR has extremely low power consumption, and greater power saving gain can be obtained.

In embodiments of the present disclosure, to normally detect the LP-WUS, the terminal 101 may obtain time and frequency positions at which the network device 102 transmits the LP-WUS. The terminal 101 may obtain time and frequency synchronization by detecting a synchronization signal. Optionally, the synchronization signal may be, for example, a Synchronization Signal Block (SSB), or an LP-SS.

Embodiments of the present disclosure provide a method for performing an RRM measurement on a neighboring cell by using an LR.

FIG. 2a is an interaction schematic diagram of a communication method according to an embodiment of the present disclosure. As shown in FIG. 2a, an embodiment of the present disclosure relates to a communication method, and the foregoing method includes the following steps.

In step S2101, the terminal 101 sends capability information to the network device 102.

Optionally, the capability information indicates a capability of the terminal 101 to perform an RRM measurement on a neighboring cell by using the LR.

Optionally, the terminal 101 may report the capability of performing the RRM measurement on the neighboring cell by using the LR synchronously when reporting other terminal capabilities, or separately report the capability of performing the RRM measurement on the neighboring cell by using the LR.

Optionally, the terminal 101 may actively report the foregoing capability, or report the capability based on an indication from the network device 102.

Optionally, the terminal 101 that reports the capability information is in an RRC connected state.

In some embodiments, the capability includes at least one of:
a first capability of performing an LP-SS-based RRM measurement on the neighboring cell by using an OOK LR;
a second capability of performing the LP-SS-based RRM measurement on the neighboring cell by using an OFDM LR; or
a third capability of performing a PSS- or SSS-based RRM measurement on the neighboring cell by using the OFDM LR.

Optionally, the LR includes at least two types: an OOK LR and an OFDM LR. The OOK LR supports energy detection on signals, such as envelope detection on OOK symbols carrying the LP-WUS, and the OOK LR has relatively poor link performance. The OFDM LR supports demodulation on modulated signals, such as detecting OFDM time-domain or frequency-domain sequences carried by OOK symbols of the LP-WUS, so as to improve link performance.

Optionally, when frequencies where the PSS or the SSS is located fall within frequency bands supported by the OFDM LR, the OFDM LR may detect a PSS sequence or an SSS sequence.

Optionally, the LP-SS may be used for synchronization, and may also serve as a reference signal for RRM measurement to implement measurement. For the OOK LR, detection may be performed on OOK signals on the time-domain of the LP-SS; for the OFDM LR, detection may be performed on signals on the time-domain of the LP-SS, and OFDM demodulation may be performed on information carried in the frequency domain of the LP-SS.

Optionally, the LP-SS is a cell-level common signal. Configuration or configuration information of the LP-SS may be per-cell, that is, each cell may be configured with a respective LP-SS. Alternatively, partial cells are configured with the LP-SS, for example, a certain cell is configured with the LP-SS, but neighboring cells of the cell are not configured with the LP-SS. Power at which different cells are configured with the LP-SS may be different.

In some embodiments, step S2101 may be omitted, for example, the terminal 101 may not report the foregoing capability, and performs corresponding operations based on an indication from the network device 102. When an operation indicated by the network device 102 exceeds the capability of the terminal 101 itself, the terminal 101 may ignore the relevant indication.

In some embodiments, the network device 102 may receive the capability information from the terminal 101 to learn the measurement capability of the terminal 101 using the LR, which facilitates configuring relevant parameters for performing the RRM measurement via the LR for the terminal 101 in the RRC connected state.

In step S2102, the network device 102 sends first indication information to the terminal 101.

Optionally, the first indication information indicates whether the terminal 101 uses an LR to perform an RRM measurement on a neighboring cell.

In some embodiments, the network device 102 explicitly configures, by using a higher-layer parameter, whether the terminal 101 uses the LR to perform the RRM measurement on the neighboring cell.

Optionally, the first indication information is sent via broadcast information or via UE-specific signaling.

In an example, for the terminal 101 in an RRC idle state or an RRC inactive state, the network device 102 sends the first indication information through System Information (SI) broadcast. For example, a parameter is configured in the SI. When the parameter corresponds to a first parameter value, it indicates that the terminal 101 uses the LR to perform the RRM measurement on the neighboring cell, and the terminal 101 may perform step S2105. When the parameter corresponds to a second parameter value, it indicates that the terminal 101 does not use the LR to perform the RRM measurement on the neighboring cell, and the terminal 101 may perform step S2106.

In another example, for the terminal 101 in an RRC connected state, the network device 102 sends the first indication information through UE-specific RRC signaling. For example, a parameter is configured in the UE-specific RRC signaling. When the parameter corresponds to a first parameter value, it indicates that the terminal 101 uses the LR to perform the RRM measurement on the neighboring cell, and the terminal 101 may perform step S2105. When the parameter corresponds to a second parameter value, it indicates that the terminal 101 does not use the LR to perform the RRM measurement on the neighboring cell, and the terminal 101 may perform step S2106.

Optionally, when the network device 102 does not configure the first indication information or the foregoing parameter, it indicates that the terminal 101 does not use the LR to perform the RRM measurement on the neighboring cell, and the terminal 101 may perform step S2106.

Optionally, the neighboring cell is an intra-frequency neighboring cell or an inter-frequency neighboring cell of a serving cell of the terminal.

In some embodiments, the terminal 101 receives the first indication information.

In step S2103, the network device 102 sends second indication information to the terminal 101.

Optionally, the second indication information indicates a reference signal used for the RRM measurement.

Optionally, the reference signal includes at least one of LP-SS, PSS, or SSS.

In an example, when a neighboring cell is configured with an LP-SS and the LP-SS can be measured by the terminal 101 under the current cell via the LR, the network device 102 may configure the terminal 101 to perform the RRM measurement on the neighboring cell based on the LP-SS. If the neighboring cell is not configured with an LP-SS, the network device 102 may not configure the terminal 101 to perform the RRM measurement on the neighboring cell based on the LP-SS.

In this example, if the neighboring cell performs power boosting, or the terminal 101 is equipped with an OFDM LR, it may be deemed that the LP-SS can be measured by the terminal 101 under the current cell via the LR.

Optionally, the network device 102 may obtain information about neighboring cells through an inter-base station interface or a network node such as a network control center, so as to implement reasonable configuration.

Optionally, step S2103 may be omitted. For example, when the reference signal used for the RRM measurement is defined by a protocol, step S2103 may be omitted.

In some embodiments, the first indication information and the second indication information may be sent through the same signaling, for example, the first indication information and the second indication information correspond to different parameters in the same signaling; alternatively, the first indication information and the second indication information are separately sent through different signaling.

Optionally, the second indication information may be sent via broadcast information or dedicated signaling.

In some embodiments, there is a large performance gap between receiving performance of an OOK LR and an OFDM LR. The first indication information may indicate for one specific type of LR, or separately indicate for both types of LR.

In an example, the LR is an OOK LR supporting processing an OOK signal, or an OFDM LR supporting processing an OFDM modulated signal. For example, the first indication information indicates for the terminal 101 equipped with the OFDM LR, or the measurement indicated by the first indication information is performed by default by the terminal 101 with the OFDM LR. For the terminal 101 equipped with the OOK LR, it may default to not supporting the RRM measurement on the neighboring cell based on the foregoing reference signals.

In another example, the first indication information indicates at least one of:
a terminal with the OOK LR performing an LP-SS-based RRM measurement;
a terminal with the OFDM LR performing the LP-SS-based RRM measurement; or
the terminal with the OFDM LR performing a PSS or SSS-based RRM measurement.

In this example, the RRM measurement refers to an RRM measurement on a neighboring cell such as an intra-frequency neighboring cell or an inter-frequency neighboring cell.

In this example, the network device 102 may send separate indications for different LRs and different reference signals. For example, if the neighboring cell is configured with LP-SS power boosting, the overlapping coverage area between the neighboring cell and the current cell in network deployment is relatively large, and the LP-SS of the neighboring cell can be measured by using the OOK LR, the network device 102 may configure the terminal 101 with the OOK LR to perform the RRM measurement on the neighboring cell.

In this example, a frequency supported by the OFDM LR includes a frequency of the PSS or a frequency of the SSS. Frequencies supported by the OFDM LR of the terminal 101 may be several frequencies defined by a protocol. Due to the low cost and low complexity characteristics of the LR, the number of frequencies supported by the LR may be limited. The PSS or the SSS may be on many frequencies defined by a protocol. If the frequency where the PSS or the SSS of the neighboring cell is located is outside the frequency range supported by the OFDM LR, the OFDM LR may not be used to perform the PSS or SSS-based RRM measurement on the neighboring cell.

In this example, when the terminal 101 is in an RRC idle state or an inactive state, the first indication information indicates that the terminal with the OOK LR performs the LP-SS-based RRM measurement, or that the terminal with the OFDM LR performs the LP-SS-based RRM measurement. With reference to the descriptions in the foregoing embodiments, the LP-SS is a cell-level common signal. If the LP-SS-based measurement is configured for the terminal 101 in the RRC connected state, the LP-SS may not be located on the active BWP of the terminal 101 in the connected state or may not overlap with the active BWP. The terminal 101 in the connected state may switch between the active BWP and the frequency corresponding to the LP-SS during monitoring, which increases overhead of the terminal 101.

In some embodiments, the terminal 101 receives the second indication information.

In step S2104, the network device 102 sends third indication information to the terminal 101.

Optionally, the third indication information indicates cell information of at least one neighboring cell to be measured by the LR, and the cell information includes at least one of a cell identifier, a cell index, or a cell frequency point.

In an example, the network device 102 configures, via the third indication information, the terminal 101 to perform an RRM measurement on a neighboring cell at a specific frequency point by using the LR. For example, the neighboring cell at the specific frequency point is a cell with a high-priority frequency point.

In some embodiments, the third indication information may be sent independently, or sent together with the first indication information and/or the second indication information via the same signaling, or the first indication information, the second indication information and the third indication information are different parameters within the same signaling.

Optionally, the third indication information may be sent via broadcast information or dedicated signaling. When sent via broadcast information, the network device 102 may configure a certain type of LR to perform an RRM measurement on a certain neighboring cell, for example, configure the terminal with the OFDM LR to perform the RRM measurement on one or more neighboring cells.

In some embodiments, the terminal 101 receives the third indication information.

In step S2105, the terminal 101 performs the RRM measurement on the neighboring cell by using the LR.

Optionally, the terminal 101 performs step S2105 when the first indication information indicates that the terminal 101 uses the LR to perform the RRM measurement.

In an example, when the terminal 101 performs the measurement by using the LR, the MR may be in a sleep state to realize power saving of the MR.

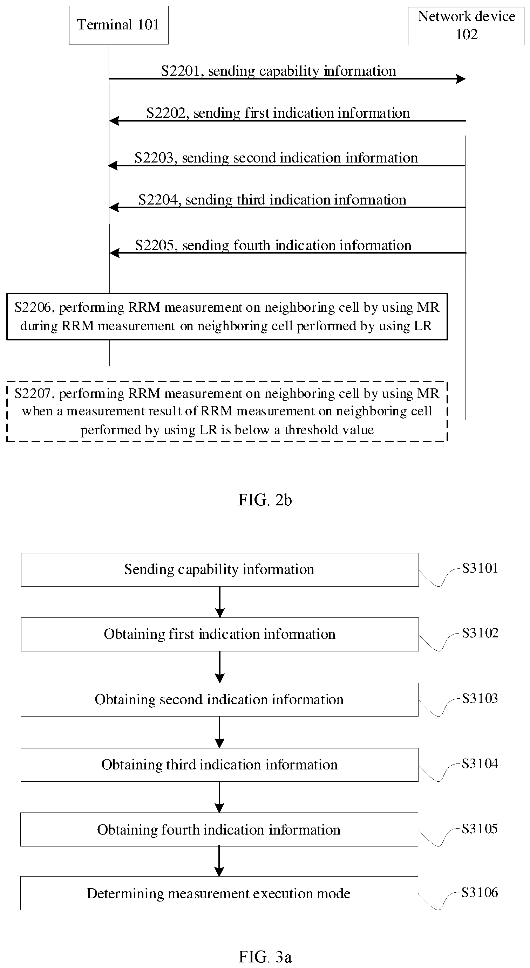

In another example, during the process that the terminal 101 performs the measurement by using the LR, the terminal 101 may perform relaxed measurement by using the MR. for this example, reference may be made to the implementation of step S2206 in the embodiment of FIG. 2b, which will not be repeated herein.

In some embodiments, when the terminal 101 detects that a condition for starting a neighboring cell measurement is satisfied, the terminal 101 may perform a neighboring cell measurement by using the LR. Using the LR consumes less power than using the MR.

Optionally, the condition may be that a measurement value obtained by the terminal 101 through measuring the serving cell or camping cell where the terminal resides is lower than a threshold. For example, when a measurement result of the serving cell of the terminal 101 is lower than a first threshold, intra-frequency neighboring cell measurement is triggered; and when a measurement result of the serving cell is lower than a second threshold, inter-frequency neighboring cell measurement is triggered.

Optionally, for a cell with a high-priority frequency point, the terminal 101 may always keep measurement on the cell of high-priority frequency point enabled without judging the condition.

In step S2106, the terminal 101 performs the RRM measurement on the neighboring cell by using the MR.

Optionally, the terminal 101 performs step S2106 when the first indication information indicates that the terminal 101 does not use the LR to perform the RRM measurement.

In some embodiments, when the terminal 101 detects that a condition for starting neighboring cell measurement is satisfied, the terminal 101 may activate the MR to perform neighboring cell measurement. The measurement condition may refer to the description of the embodiment in step S2105, which will not be repeated herein.

Optionally, step S2106 and step S2105 are parallel steps, and the terminal 101 may perform one of them.

In some embodiments, name of information and the like is not limited to that described in the embodiments, and terms such as "information", "message", "signal", "signaling", "report", "configuration", "indication", "instruction", "command", "channel", "parameter", "domain", "field" may be replaced with each other.

In some embodiments, terms such as "acquire", "obtain", "get", "receive", "transmit", "transmit in two-direction", "send and/or receive" may be replaced with each other, which may be interpreted as receiving from another subject, obtaining from a protocol, obtaining from a higher layer, obtaining through self-processing, autonomous implementation, and the like.

In some embodiments, terms such as "send", "emit", "report", "deliver", "transmit", "transmit in two-direction", "send and/or receive" may be replaced with each other.

In some embodiments, terms such as "radio", "wireless", "radio access network (RAN)", "access network (AN)", and "RAN-based" may be replaced with each other.

In some embodiments, terms such as "time instant", "time point", "time", "time position" may be replaced with each other, and terms such as "duration", "time period", "time window", "window" and "time" may be replaced with each other.

In some embodiments, terms such as "component carrier (CC)", "cell", "frequency carrier", "carrier frequency" may be replaced with each other.

In some embodiments, terms such as "certain", "preset", "predefined", "configured", "indicated", "a certain", "any", and "first" may be replaced with each other. Expressions including "certain A", "preset A", "predefined A", "configured A", "indicated A", "a certain A", "any A", and "first A" may be interpreted as A stipulated in advance in protocols or the like, or A obtained through setting, configuration, indication or the like, or certain A, a certain A, any A, first A, and so on, which however is not limited thereto.

In some embodiments, the determination or judgment may be performed via a value represented by 1 bit (0 or 1), via a boolean value represented by true or false, or via numerical comparison (for example, comparison with a predetermined value), but is not limited thereto.

In some embodiments, "not expecting to receive" may be interpreted as not receiving on time-domain resources and/or frequency-domain resources, or as not performing subsequent processing on data and the like after receiving the data and the like; and "not expecting to send" may be interpreted as not sending, or as sending without expecting a response from the receiver for the sent content.

The method involved in the embodiments of the present disclosure may include at least one of step S2101 to step S2106, for example, the method includes step S2102.

In some embodiments, step S2101 is optional, and one or more of these steps may be omitted or replaced in different embodiments.

In some embodiments, orders of step S2102 to step S2104 may be exchanged or step S2102 to step S2104 may be executed simultaneously. For example, the network device 102 sends the first indication information, the second indication information and the third indication information through one piece of signaling.

In some embodiments, step S2105 and step S2106 are parallel, and the terminal 101 performs one of them based on the first indication information.

In some embodiments, reference may be made to other optional implementations described before or after the specification corresponding to FIG. 2a.

FIG. 2b is an interaction schematic diagram of a communication method according to an embodiment of the present disclosure. As shown in FIG. 2b, an embodiment of the present disclosure relates to a communication method, and the method includes the following steps.

In step S2201, the terminal 101 sends capability information to the network device 102.

In some embodiments, for the implementation of step S2201, reference may be made to the optional implementations of step S2101, which will not be repeated herein.

In step S2202, the network device 102 sends first indication information to the terminal 101.

In some embodiments, for the implementation of step S2202, reference may be made to the optional implementations of step S2102, which will not be repeated herein.

In step S2203, the network device 102 sends second indication information to the terminal 101.

In some embodiments, for the implementation of step S2203, reference may be made to the optional implementations of step S2103, which will not be repeated herein.

In step S2204, the network device 102 sends third indication information to the terminal 101.

In some embodiments, for the implementation of step S2204, reference may be made to the optional implementations of step S2104, which will not be repeated herein.

In step S2205, the network device 102 sends fourth indication information to the terminal 101.

Optionally, the fourth indication information indicates whether the terminal uses an MR to perform the RRM measurement on the neighboring cell while performing the RRM measurement on the neighboring cell by using the LR.

In some embodiments, the fourth indication information may be sent independently, or sent via the same signaling together with at least one of the first indication information, the second indication information or the third indication information.

Optionally, the fourth indication information may be sent via broadcast information or via UE-specific signaling.

In some embodiments, a measurement period for performing the RRM measurement on the neighboring cell by using the MR is greater than a measurement period for performing the RRM measurement on the neighboring cell by using the LR. That is, during the process in which the LR performs the neighboring cell measurement, the neighboring cell measurement performed by the MR is relaxed measurement.

For example, the measurement period for the RRM measurement performed by the MR is N times the measurement period for the RRM measurement performed by the LR. Alternatively, the measurement period for the RRM measurement performed by the MR when the LR performs the RRM measurement is N times the measurement period for the normal RRM measurement performed by only the MR when the LR does not perform the RRM measurement, where N is greater than 1. Optionally, N is configured by the network device 102 or defined by a protocol.

In some embodiments, when the fourth indication information indicates that the terminal 101 performs relaxed RRM measurement on the neighboring cell via the MR during the process of performing the measurement via LR, the terminal 101 may perform step S2206 or step S2207.

In step S2206, the terminal 101 performs the RRM measurement on the neighboring cell by using the MR during the RRM measurement on the neighboring cell performed by using the LR.

Optionally, the measurement period for the RRM measurement performed by the MR still complies with the implementations described in step S2205. For example, the measurement period for the RRM measurement performed by the terminal 101 via the MR is N times the measurement period for the RRM measurement performed via the LR, so that power saving of the MR can still be maintained while improving measurement accuracy.

Optionally, the neighboring cell subject to the foregoing measurement may be an intra-frequency neighboring cell or an inter-frequency neighboring cell.

In step S2207, the terminal 101 performs the RRM measurement on the neighboring cell by using the MR when a measurement result of the RRM measurement on the neighboring cell performed by using the LR is below a threshold value.

Optionally, the measurement result is at least one of Reference Signal Received Power (RSRP), Reference Signal Received Quality (RSRQ), Signal to Interference plus Noise Ratio (SINR), or Receive Signal Strength Indication (RSSI).

Optionally, the measurement precision of the MR is higher than that of the LR, especially under low signal-to-noise ratio scenarios. Therefore, the terminal 101 may modify the measurement result of the LR with the measurement result of the MR to improve the accuracy of measurement results.

The method involved in the embodiments of the present disclosure may include at least one of step S2201 to step S2207, for example, the method includes step S2202.

In some embodiments, step S2201 is optional, and one or more of these steps may be omitted or replaced in different embodiments.

In some embodiments, orders of step S2202 to step S2205 may be exchanged or step S2202 to step S2205 may be executed simultaneously. For example, the network device 102 sends the first indication information, the second indication information, the third indication information and the fourth indication information through one piece of signaling; alternatively, the network device 102 sends the four types of indication information separately through different signaling.

In some embodiments, step S2206 and step S2207 are parallel, and the terminal 101 may perform one of them.

In some embodiments, reference may be made to other optional implementations described before or after the specification corresponding to FIG. 2b.

FIG. 3a is a schematic diagram of a communication method according to an embodiment of the present disclosure. As shown in FIG. 3a, an embodiment of the present disclosure relates to a communication method performed by the terminal 101, and the method includes the following steps.

In step S3101, capability information is sent.

In some embodiments, for the implementation of step S3101, reference may be made to the optional implementations of step S2101, which will not be repeated herein.

In step S3102, first indication information is obtained.

In some embodiments, for the implementation of step S3102, reference may be made to the optional implementations of step S2102, which will not be repeated herein.

In step S3103, second indication information is obtained.

In some embodiments, for the implementation of step S3103, reference may be made to the optional implementations of step S2103, which will not be repeated herein.

In step S3104, third indication information is obtained.

In some embodiments, for the implementation of step S3104, reference may be made to the optional implementations of step S2104, which will not be repeated herein.

In step S3105, fourth indication information is obtained.

In some embodiments, for the implementation of step S3105, reference may be made to the optional implementations of step S2205, which will not be repeated herein.

In step S3106, a measurement execution mode is determined.

In some implementations, for the implementation of step S3106, reference may be made to the implementations of step S2105 or step S2106, which will not be repeated herein.

In some implementations, for the implementation of step S3106, reference may be made to the implementations of step S2206 or step S2207, which will not be repeated herein.

The method involved in the embodiments of the present disclosure may include at least one of step S3101 to step S3106, for example, the method includes step S3102.

In some embodiments, reference may be made to other optional implementations described before or after the specification corresponding to FIG. 3a.

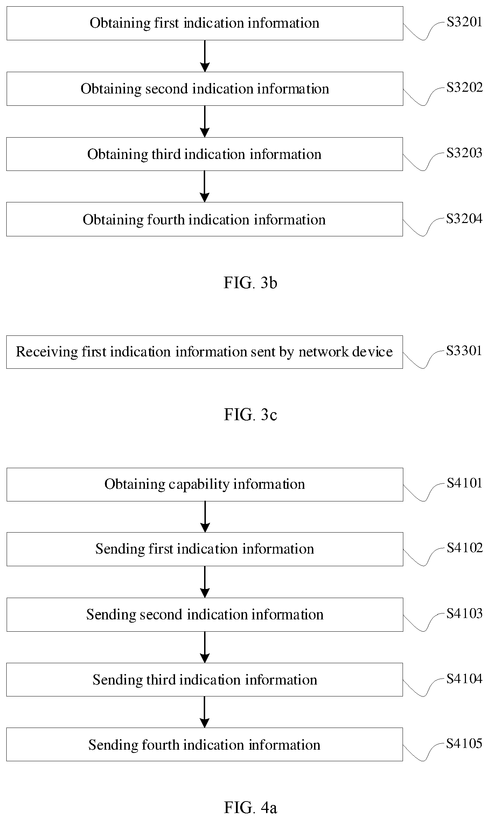

FIG. 3b is a schematic diagram of a communication method according to an embodiment of the present disclosure. As shown in FIG. 3b, an embodiment of the present disclosure relates to a communication method performed by the terminal 101, and the method includes the following steps.

In step S3201, first indication information is obtained.

In some embodiments, for the implementation of step S3201, reference may be made to the optional implementations of step S2102, which will not be repeated herein.

In step S3202, second indication information is obtained.

In some embodiments, for the implementation of step S3202, reference may be made to the optional implementations of step S2103, which will not be repeated herein.

In step S3203, third indication information is obtained.

In some embodiments, for the implementation of step S3203, reference may be made to the optional implementations of step S2104, which will not be repeated herein.

In step S3204, fourth indication information is obtained.

In some embodiments, for the implementation of step S3204, reference may be made to the optional implementations of step S2205, which will not be repeated herein.

The method involved in the embodiments of the present disclosure may include at least one of step S3201 to step S3204.

In some embodiments, reference may be made to other optional implementations described before or after the specification corresponding to FIG. 3b.

FIG. 3c is a schematic diagram of a communication method according to an embodiment of the present disclosure. As shown in FIG. 3c, an embodiment of the present disclosure relates to a communication method performed by the terminal 101, and the method includes the following steps.

In step S3301, first indication information sent by a network device is received.

In some embodiments, for the implementation of step S3301, reference may be made to the optional implementations of step S2102, which will not be repeated herein.

Optionally, the first indication information indicates whether the terminal uses a low-power wake up receiver (LR) to perform a radio resource management (RRM) measurement on a neighboring cell.

In some embodiments, the method further includes: receiving second indication information sent by the network device, wherein the second indication information indicates a reference signal used for the RRM measurement; or
the reference signal used for the RRM measurement is defined by a protocol;
wherein the reference signal includes at least one of a low power synchronization signal (LP-SS), a primary synchronization signal (PSS), or a secondary synchronization signal (SSS).

In some embodiments, the LR is an on-off keying (OOK) LR supporting processing a binary OOK signal, or an orthogonal frequency division multiplexing (OFDM) LR supporting processing an OFDM modulated signal.

In some embodiments, the first indication information indicates at least one of:
a terminal with an OOK LR performing an LP-SS-based RRM measurement;
a terminal with an OFDM LR performing the LP-SS-based RRM measurement; or
the terminal with the OFDM LR performing a PSS or SSS-based RRM measurement.

In some embodiments, a frequency supported by the OFDM LR includes a frequency of the PSS or a frequency of the SSS.

In some embodiments, when the terminal is in a radio resource control (RRC) idle state or an inactive state, the first indication information indicates that the terminal with the OOK LR performs the LP-SS-based RRM measurement, or that the terminal with the OFDM LR performs the LP-SS-based RRM measurement.

In some embodiments, the method further includes:
receiving third indication information sent by the network device, wherein the third indication information indicates cell information of at least one neighboring cell to be measured by the LR, and the cell information includes at least one of a cell identifier, a cell index, or a cell frequency point.

In some embodiments, the method further includes:
performing the RRM measurement on the neighboring cell by using the LR, wherein the first indication information indicates that the terminal uses the LR to perform the RRM measurement; or
performing the RRM measurement on the neighboring cell by using a main receiver (MR), wherein the first indication information indicates that the terminal does not use the LR to perform the RRM measurement.

In some embodiments, the method further includes:
receiving fourth indication information sent by the network device, wherein the fourth indication information indicates whether the terminal uses an MR to perform the RRM measurement on the neighboring cell while performing the RRM measurement on the neighboring cell by using the LR.

In some embodiments, a measurement period for performing the RRM measurement on the neighboring cell by using the MR is greater than a measurement period for performing the RRM measurement on the neighboring cell by using the LR.

In some embodiments, the method further includes:
performing the RRM measurement on the neighboring cell by using the MR during the RRM measurement on the neighboring cell performed by using the LR; or
performing the RRM measurement on the neighboring cell by using the MR when a measurement result of the RRM measurement on the neighboring cell performed by using the LR is below a threshold value.

In some embodiments, the method further includes:
sending capability information to the network device, wherein the capability information indicates a capability of the terminal to perform the RRM measurement on the neighboring cell by using the LR.

In some embodiments, the capability includes at least one of:
a first capability of performing an LP-SS-based RRM measurement on the neighboring cell by using an OOK LR;
a second capability of performing the LP-SS-based RRM measurement on the neighboring cell by using an OFDM LR; or
a third capability of performing a PSS- or SSS-based RRM measurement on the neighboring cell by using the OFDM LR.

In some embodiments, the neighboring cell is an intra-frequency neighboring cell or an inter-frequency neighboring cell of a serving cell of the terminal.

In some embodiments, the first indication information is sent via broadcast information or via UE-specific signaling.

In some embodiments, reference may be made to other optional implementations described before or after the specification corresponding to FIG. 3c.

FIG. 4a is a schematic diagram of a communication method according to an embodiment of the present disclosure. As shown in FIG. 4a, an embodiment of the present disclosure relates to a communication method performed by the network device 102, and the method includes the following steps

In step S4101, capability information is obtained.

In some embodiments, for the implementation of step S4101, reference may be made to the optional implementations of step S2101, which will not be repeated herein.

In step S4102, first indication information is sent.

In some embodiments, for the implementation of step S4102, reference may be made to the optional implementations of step S2102, which will not be repeated herein.

In step S4103, second indication information is sent.

In some embodiments, for the implementation of step S4103, reference may be made to the optional implementations of step S2103, which will not be repeated herein.

In step S4104, third indication information is sent.

In some embodiments, for the implementation of step S4104, reference may be made to the optional implementations of step S2104, which will not be repeated herein.

In step S4105, fourth indication information is sent.

In some embodiments, for the implementation of step S4105, reference may be made to the optional implementations of step S2205, which will not be repeated herein.

The method involved in the embodiments of the present disclosure may include at least one of step S4101 to step S4105, for example, the method includes step S3102.

In some embodiments, reference may be made to other optional implementations described before or after the specification corresponding to FIG. 4a.

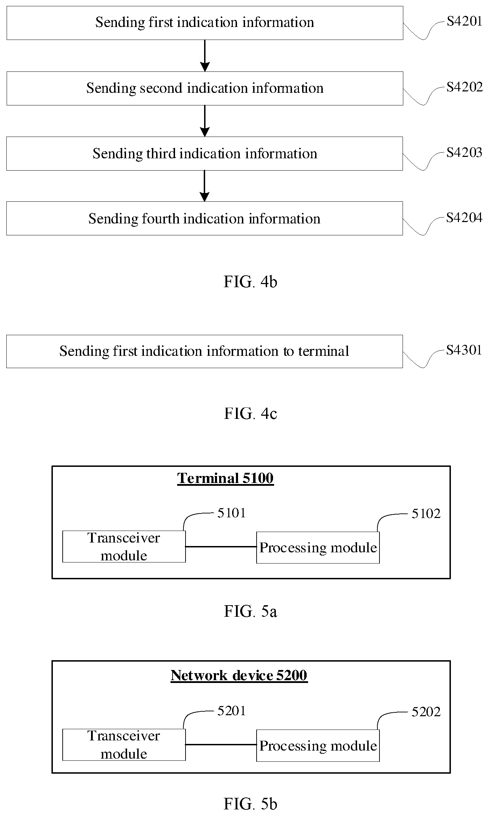

FIG. 4b is a schematic diagram of a communication method according to an embodiment of the present disclosure. As shown in FIG. 4b, an embodiment of the present disclosure relates to a communication method performed by the network device 102, and the method includes the following steps.

In step S4201, first indication information is sent.

In some embodiments, for the implementation of step S4201, reference may be made to the optional implementations of step S2102, which will not be repeated herein.

In step S4202, second indication information is sent.

In some embodiments, for the implementation of step S4202, reference may be made to the optional implementations of step S2103, which will not be repeated herein.

In step S4203, third indication information is sent.

In some embodiments, for the implementation of step S4203, reference may be made to the optional implementations of step S2104, which will not be repeated herein.

In step S4204, fourth indication information is sent.

In some embodiments, for the implementation of step S4204, reference may be made to the optional implementations of step S2205, which will not be repeated herein.

The method involved in the embodiments of the present disclosure may include at least one of step S4201 to step S4204, for example, the method includes step S4102.

In some embodiments, reference may be made to other optional implementations described before or after the specification corresponding to FIG. 4b.

FIG. 4c is a schematic diagram of a communication method according to an embodiment of the present disclosure. As shown in FIG. 4c, an embodiment of the present disclosure relates to a communication method performed by the network device 102, and the method includes the following steps.

In step S4301, first indication information is sent to a terminal.

In some embodiments, for the implementation of step S4301, reference may be made to the optional implementations of step S2102, which will not be repeated herein.

Optionally, the first indication information indicates whether the terminal uses an LR to perform an RRM measurement on a neighboring cell.

In some embodiments, the method further includes: sending second indication information to the terminal, wherein the second indication information indicates a reference signal used for the RRM measurement; or
the reference signal used for the RRM measurement is defined by a protocol;
wherein the reference signal includes at least one of LP-SS, PSS, or SSS.

In some embodiments, the LR is an OOK LR supporting processing an OOK signal, or an orthogonal frequency division multiplexing (OFDM) LR supporting processing an OFDM modulated signal.

In some embodiments, the first indication information indicates at least one of:
a terminal with the OOK LR performing an LP-SS-based RRM measurement;
a terminal with the OFDM LR performing the LP-SS-based RRM measurement; or
the terminal with the OFDM LR performing a PSS or SSS-based RRM measurement.

In some embodiments, a frequency supported by the OFDM LR includes a frequency of the PSS or a frequency of the SSS.

In some embodiments, when the terminal is in an RRC idle state or an inactive state, the first indication information indicates that the terminal with the OOK LR performs the LP-SS-based RRM measurement, or that the terminal with the OFDM LR performs the LP-SS-based RRM measurement.

In some embodiments, the method further includes:
sending third indication information to the terminal, wherein the third indication information indicates cell information of at least one neighboring cell to be measured by the LR, and the cell information includes at least one of a cell identifier, a cell index, or a cell frequency point.

In some embodiments, the method further includes:
sending fourth indication information to the terminal, wherein the fourth indication information indicates whether the terminal uses an MR to perform the RRM measurement on the neighboring cell while performing the RRM measurement on the neighboring cell by using the LR.

In some embodiments, a measurement period for performing the RRM measurement on the neighboring cell by using the MR is greater than a measurement period for performing the RRM measurement on the neighboring cell by using the LR.

In some embodiments, the method further includes:
receiving capability information sent by the terminal, wherein the capability information indicates a capability of the terminal to perform the RRM measurement on the neighboring cell by using the LR.

In some embodiments, the capability includes at least one of:
a first capability of performing an LP-SS-based RRM measurement on the neighboring cell by using an OOK LR;
a second capability of performing the LP-SS-based RRM measurement on the neighboring cell by using an OFDM LR; or
a third capability of performing a PSS- or SSS-based RRM measurement on the neighboring cell by using the OFDM LR.

In some embodiments, the neighboring cell is an intra-frequency neighboring cell or an inter-frequency neighboring cell of a serving cell of the terminal.

In some embodiments, the first indication information is sent via broadcast information or via UE-specific signaling.

In some embodiments, reference may be made to other optional implementations described before or after the specification corresponding to FIG. 4c.

The methods provided by the embodiments of the present disclosure can solve the problem of how to utilize an LP-WUR to perform neighboring cell RRM measurement. To facilitate understanding of the embodiments of the present disclosure, several examples are listed as follows:

### Example 1:

A base station configures whether to use an LR to perform an RRM measurement on a neighboring cell based on a first signal, for example, explicitly configurates the same via a higher-layer parameter.

Optionally, if the base station configures not to use the first signal to perform the RRM measurement on the neighboring cell, or does not configure to use the first signal to perform the RRM measurement on the neighboring cell, the UE activates an MR to perform neighboring cell measurement when the UE detects that a condition for triggering neighboring cell measurement is satisfied. If the base station configures to use the first signal to perform neighboring cell measurement, the UE may use an LR to perform neighboring cell measurement when the UE detects that a condition for triggering neighboring cell measurement is satisfied. Using the LR consumes less power than using the MR.

Optionally, the first signal may be an LP-SS, a PSS, or an SSS.

Optionally, if a neighboring cell is equipped with an LP-SS and the LP-SS can be measured by the LR of a UE under the current cell, the base station may configure to use the LR to perform an LP-SS-based measurement on the neighboring cell. If the neighboring cell is not equipped with an LP-SS, the base station may not configure to use the LP-SS for the RRM measurement on the neighboring cell.

Optionally, the neighboring cell measurement may be an RRM measurement on an intra-frequency neighboring cell and an RRM measurement on an inter-frequency neighboring cell.

Optionally, considering the large gap in receiving performance between an OOK LR and an OFDM LR, such measurement is performed by default by a terminal with an OFDM LR. The terminal with an OOK LR default to not supporting neighboring cell measurement based on the first signal.

Optionally, configuration may be delivered via broadcast information (for UE in RRC idle or inactive state), or via UE-specific signaling (for UE in RRC connected state).

### Example 2:

Based on Example 1, the base station may separately configure whether to perform the following RRM measurements:
a) Performing LP-SS-based neighboring cell measurement (intra-frequency/inter-frequency neighboring cell measurement) by using an OOK LR, where:
   If the neighboring cell is configured with LP-SS power boosting and there exists a large overlapping coverage area between the neighboring cell and the current cell in network deployment such that the LP-SS of the neighboring cell can be detected even via the OOK LR, the OOK LR may be used to perform the RRM measurement on the neighboring cell. The base station may obtain information about neighboring cells through an inter-base station interface or a network node such as a network control center, so as to implement reasonable configuration.
b) Performing LP-SS-based neighboring cell measurement (intra-frequency or inter-frequency neighboring cell measurement) by using an OFDM LR;
c) Performing PSS- or SSS-based RRM measurement on the neighboring cell (intra-frequency or inter-frequency neighboring cell measurement) by using an OFDM LR, where:
   The frequencies supported by the OFDM LR may be several frequencies defined by protocols. In view of the low-cost and low-complexity characteristics of the LR, the number of frequencies supported by the LR may be limited. However, the PSS or the SSS can be on numerous frequencies specified in existing protocols. It is possible that the frequency where the PSS/SSS of the neighboring cell is located falls outside the frequency range supported by the OFDM LR. In such a case, the OFDM LR may not be used to perform RRM measurement on the neighboring cell based on the PSS or the SSS.

Optionally, items a) to c) are applicable to UEs in the RRC idle state, inactive state or RRC connected state, and items a) and b) are preferably applied to UEs in the RRC idle state or inactive state.

### Example 3:

Based on Example 1, the base station may further configure whether to activate the MR to perform relaxed RRM measurement on the neighboring cell while the LR is used to perform the neighboring cell measurement based on the first signa.
a) The relaxed RRM measurement on the neighboring cell performed by the MR means that the MR performs neighboring cell measurement with a longer measurement period (for example, N times the period for the LR to measure the LP-SS), which may be further divided into intra-frequency neighboring cell measurement and inter-frequency neighboring cell measurement. For example:
   i. the MR performs relaxed measurement while the LR performs neighboring cell measurement; and
   ii. the MR performs relaxed measurement when the measurement result of the LR is lower than a certain threshold.

Optionally, the measurement precision of the MR is higher than that of the LR (especially under low signal-to-noise ratio conditions), and the measurement result of the MR may be used to modify the measurement result of the LR.

### Example 4:

Based on Example 1, the base station configures whether the terminal uses the LR to perform RRM measurement on one or more neighboring cells (or neighboring cells on specific frequency points). For example, such neighboring cells are cells on high-priority frequency points.

Optionally, such configuration may be UE-specific configuration or broadcast configuration. In the case of broadcast configuration, a certain type of LR may be configured to perform RRM measurement on a certain neighboring cell. For example, a terminal equipped with an OFDM LR performs RRM measurement on one or more neighboring cells.

### Example 5:

Based on Example 1, UE capabilities are defined, which refer to UE capabilities of performing the RRM measurement on the neighboring cell by using an LR, including:
the capability of performing LP-SS-based neighboring cell measurement by using an OOK LR;
the capability of performing LP-SS-based neighboring cell measurement by using an OFDM LR; and
the capability of performing PSS- or SSS-based RRM measurement on the neighboring cell by using an OFDM LR.

Optionally, the neighboring cell measurement in the capabilities includes intra-frequency neighboring cell measurement or inter-frequency neighboring cell measurement.

Optionally, the UE may further report the foregoing capabilities and report its own LR type to the base station, so that the base station may configure relevant parameters for performing RRM measurement via the LR for the UE when the UE is in the RRC connected state.

The embodiments of the present disclosure further provide a device for implementing any one of the above methods. For example, there is provided a device including units or modules for implementing steps executed by the terminal in any one of the above methods. For another example, there is also provided a device including units or modules for implementing steps executed by the network device such as access network devices, core network functional nodes, and core network devices in any one of the above methods.

It should be understood that the division of units or modules in the above device is merely a division of logical functions, and in actual implementation, all or part of the units or modules may be integrated into one physical entity or may be physically separated. In addition, the unit or module in the device may be implemented in the form of a processor invoking software, for example, the device includes a processor, the processor is connected to a memory, the memory stores instructions, and the processor invokes the instructions stored in the memory to implement any one of the above methods or functions of each unit or module of the above device, the processor is, e.g., a general-purpose processor such as a Central Processing Unit (CPU) or a microprocessor, and the memory is a memory inside the device or a memory outside the device. Alternatively, the unit or module in the device may be implemented in the form of a hardware circuit, and functions of some or all of the units or modules may be implemented by designing the hardware circuit, which may be understood as one or more processors, for example, in one implementation, the hardware circuit is an Application-Specific Integrated Circuit (ASIC), and functions of some or all of the above units or modules are implemented by designing a logical relationship of elements in the circuit; for another example, in another implementation, the hardware circuit may be implemented by a Programmable Logic Device (PLD), and taking a Field Programmable Gate Array (FPGA) as an example, it may include a large number of logic gate circuits, and a connection relationship between the logic gate circuits is configured by a configuration file, so as to implement functions of some or all of the above units or modules. All units or modules of the above device may be implemented entirely in the form of a processor invoking software, entirely in the form of a hardware circuit, or partly in the form of a processor invoking software and the rest in the form of a hardware circuit.

In an embodiment of the present disclosure, the processor is a circuit with signal processing capability. In one implementation, the processor may be a circuit with instruction reading and operating capabilities, such as a Central Processing Unit (CPU), a microprocessor, a Graphics Processing Unit (GPU) (which may be understood as a microprocessor), a Digital Signal Processor (DSP), or the like; in another implementation, the processor may implement certain functions through a logical relationship of a hardware circuit, which is fixed or reconfigurable, e.g., a hardware circuit implemented by an Application-Specific Integrated Circuit (ASIC) or a Programmable Logic Device (PLD) such as an FPGA. In a reconfigurable hardware circuit, a process of loading a configuration document by the processor to implement configuration of the hardware circuit may be understood as a process of loading instructions by the processor to implement functions of some or all of the above units or modules. In addition, it may also be a hardware circuit designed for artificial intelligence, which may be understood as an ASIC, such as a Neural Network Processing Unit (NPU), a Tensor Processing Unit (TPU), a Deep Learning Processing Unit (DPU), etc.

FIG. 5a is a structural schematic diagram of a terminal provided by an embodiment of the present disclosure. As shown in FIG. 5a, the terminal 5100 may include at least one of a transceiver module 5101, a processing module 5102 and the like. In some embodiments, the foregoing transceiver module 5101 is configured to receive first indication information sent by a network device, and the first indication information indicates whether the terminal uses a low-power wake up receiver (LR) to perform a radio resource management (RRM) measurement on a neighboring cell.

Optionally, the foregoing transceiver module 5101 is configured to perform at least one of the communication steps such as sending and/or receiving performed by the terminal 101 in any one of the foregoing methods, which will not be repeated herein. Optionally, the foregoing processing module 5102 is configured to perform at least one of other steps performed by the terminal 101 in any one of the foregoing methods, which will not be repeated herein.

FIG. 5b is a structural schematic diagram of a network device provided by an embodiment of the present disclosure. As shown in FIG. 5b, the network device 5200 may include at least one of a transceiver module 5201, a processing module 5202 and the like.

In some embodiments, when the network device 5200 serves as the network device, the foregoing transceiver module 5201 is configured to send first indication information to a terminal, and the first indication information indicates whether the terminal uses an LR to perform an RRM measurement on a neighboring cell.

Optionally, the foregoing transceiver module 5201 is configured to perform at least one of the communication steps such as sending and/or receiving performed by the network device in any one of the foregoing methods, which will not be repeated herein. Optionally, the foregoing processing module 5202 is configured to perform at least one of other steps performed by the network device 102 in any one of the foregoing methods, which will not be repeated herein.

In some embodiments, the transceiver module may include a sending module and/or a receiving module, and the sending module and the receiving module may be separated or integrated together. Optionally, the transceiver module may be replaced with a transceiver.

In some embodiments, the processing module may be a single module or include multiple sub-modules. Optionally, the foregoing multiple sub-modules respectively perform all or part of the steps to be executed by the processing module. Optionally, the processing module may be replaced with a processor.

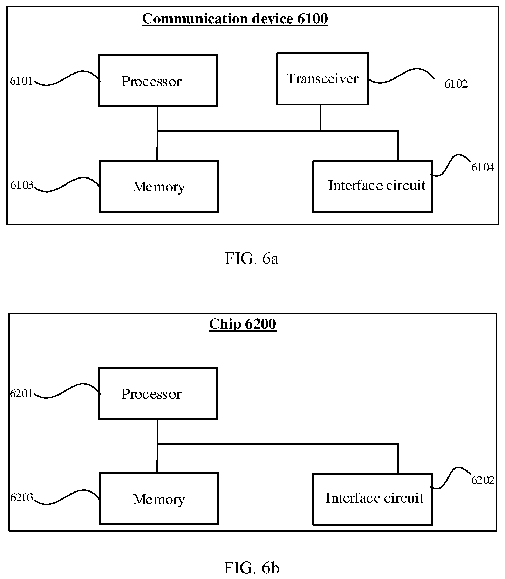

FIG. 6a is a structural schematic diagram of a communication device 6100 provided by an embodiment of the present disclosure. The communication device 6100 may be a network device (such as an access network device, a core network device, and the like), a terminal (such as user equipment and the like), or may be a chip, a chip system, a processor or the like that supports a network device to implement any one of the foregoing methods, or may be a chip, a chip system, a processor or the like that supports a terminal to implement any one of the foregoing methods. The communication device 6100 may be configured to implement the methods described in the foregoing method embodiments, and reference may be made to the descriptions in the foregoing method embodiments for details.

As shown in FIG. 6a, the communication device 6100 includes one or more processors 6101. The processor 6101 may be a general-purpose processor or a dedicated processor, for example, a baseband processor or a central processing unit. The baseband processor may be configured to process communication protocols and communication data, and the central processing unit may be configured to control a communication device (e.g., a base station, a baseband chip, a terminal device, a terminal device chip, a DU or a CU, etc.), execute programs, and process program data. Optionally, the communication device 6100 is configured to execute any of the foregoing methods. Optionally, the one or more processors 6101 are configured to invoke instructions to cause the communication device 6100 to execute any of the foregoing methods.

In some embodiments, the communication device 6100 further includes one or more transceivers 6102. When the communication device 6100 includes one or more transceivers 6102, the transceivers 6102 perform at least one of the communication steps such as sending and/or receiving in the foregoing methods, and the processors 6101 perform at least one of other steps. In optional embodiments, a transceiver may include a receiver and/or a sender, which may be integrated or separated. Optionally, terms such as transceiver, transceiving unit, transceiving machine, transceiving circuit, interface circuit and interface may be replaced with each other, terms such as sender, sending unit, sending machine, and sending circuit may be replaced with each other, and terms such as receiver, receiving unit, receiving machine, and receiving circuit may be replaced with each other.

In some embodiments, the communication device 6100 further includes one or more memories 6103 for storing data. Optionally, all or part of the memories 6103 may be arranged outside the communication device 6100. In optional embodiments, the communication device 6100 may include one or more interface circuits 6104. Optionally, the interface circuits 6104 are connected to the memories 6103, and may be configured to receive data from the memories 6103 or other devices, and send data to the memories 6103 or other devices. For example, the interface circuits 6104 may read data stored in the memories 6103 and send the data to the processors 6101.

The communication device 6100 described in the foregoing embodiments may be a network device or a terminal, but the scope of the communication device 6100 described in the present disclosure is not limited thereto, and the structure of the communication device 6100 is not restricted by FIG. 6a. The communication device may be an independent device or a part of a larger device. For example, the communication device may be: (1) an independent integrated circuit (IC), or a chip, or a chip system or a subsystem; (2) a set of one or more ICs, and optionally, the foregoing set of ICs may further include a storage component configured to store data and programs; (3) an ASIC, for example, a modem; (4) a module which can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; and (6) others.

FIG. 6b is a schematic structural diagram of a chip 6200 provided according to an embodiment of the present disclosure. When the communication device 6100 is implemented as a chip or a chip system, reference may be made to the structure of the chip 6200 shown in FIG. 6b, which is not limited thereto.

The chip 6200 includes one or more processors 6201, and the chip 6200 is configured to execute any of the foregoing methods.

In some embodiments, the chip 6200 further includes one or more interface circuits 6202. Optionally, terms such as interface circuit, interface and transceiving pin may be replaced with each other. In some embodiments, the chip 6200 further includes one or more memories 6203 for storing data. Optionally, all or part of the memories 6203 may be arranged outside the chip 6200. Optionally, the interface circuits 6202 are connected to the memories 6203, and may receive data from the memories 6203 or other devices, and may send data to the memories 6203 or other devices. For example, the interface circuits 6202 may read data stored in the memories 6203 and send the data to the processors 6201.

In some embodiments, the interface circuits 6202 perform at least one of the communication steps such as sending and/or receiving in the foregoing methods. For example, that the interface circuits 6202 perform the communication steps such as sending and/or receiving in the foregoing methods means that the interface circuits 6202 perform data interaction among the processors 6201, the chip 6200, the memories 6203 and transceiving devices. In some embodiments, the processors 6201 perform at least one of other steps.

The modules and/or components described in the embodiments of virtual devices, physical devices and chips may be arbitrarily combined or separated as required. Optionally, part or all of the steps may also be performed by a plurality of modules and/or components in cooperation, which is not limited herein.

The present disclosure further provides a storage medium having instructions stored thereon that, when running on the communication device 6100, cause the communication device 6100 to perform any one of the foregoing methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further provides a program product that, when executed by the communication device 6100, causes the communication device 6100 to perform any one of the foregoing methods. Optionally, the program product is a computer program product.

The present disclosure further provides a computer program that, when running on a computer, causes the computer to perform any one of the foregoing methods.

### Industrial Applicability

By receiving the first indication information, the terminal learns whether the network device configures the terminal to perform the RRM measurement on the neighboring cell by using an LR. Accordingly, the terminal can reasonably utilize the LR to execute permitted measurements according to the configuration of the network device, so as to reduce power consumption of the terminal.

## Claims

1. A communication method performed by a terminal, comprising:
receiving first indication information sent by a network device, wherein the first indication information indicates whether the terminal uses a low-power wake up receiver, LR, to perform a radio resource management, RRM, measurement on a neighboring cell.

2. The method according to claim 1, wherein the method further comprises:
receiving second indication information sent by the network device, the second indication information indicating a reference signal used for the RRM measurement; or
the reference signal used for the RRM measurement is defined by a protocol; and
wherein the reference signal comprises at least one of a low power synchronization signal, LP-SS, a primary synchronization signal, PSS, or a secondary synchronization signal, SSS.

3. The method according to claim 1 or 2, wherein the LR is an on-off keying, OOK, LR supporting processing a binary OOK signal, or an orthogonal frequency division multiplexing, OFDM, LR supporting processing an OFDM modulated signal.

4. The method according to claim 3, wherein the first indication information indicates at least one of:
a terminal with the OOK LR performing an LP-SS-based RRM measurement;
a terminal with the OFDM LR performing the LP-SS-based RRM measurement; or
the terminal with the OFDM LR performing a PSS or SSS-based RRM measurement.

5. The method according to claim 4, wherein a frequency supported by the OFDM LR comprises a frequency of the PSS or a frequency of the SSS.

6. The method according to claim 4, wherein when the terminal is in a radio resource control, RRC, idle state or an inactive state, the first indication information indicates that the terminal with the OOK LR performs the LP-SS-based RRM measurement, or that the terminal with the OFDM LR performs the LP-SS-based RRM measurement.

7. The method according to claim 1, further comprising:
receiving third indication information sent by the network device, wherein the third indication information indicates cell information of at least one neighboring cell to be measured by the LR,
wherein the cell information comprises at least one of a cell identifier, a cell index, or a cell frequency point.

8. The method according to any of claims 1 to 7, further comprising:
performing the RRM measurement on the neighboring cell by using the LR, wherein the first indication information indicates that the terminal uses the LR to perform the RRM measurement; or
performing the RRM measurement on the neighboring cell by using a main receiver, MR, wherein the first indication information indicates that the terminal does not use the LR to perform the RRM measurement.

9. The method according to any of claims 1 to 7, further comprising:
receiving fourth indication information sent by the network device, wherein the fourth indication information indicates whether the terminal uses an MR to perform the RRM measurement on the neighboring cell while performing the RRM measurement on the neighboring cell by using the LR.

10. The method according to claim 9, wherein a measurement period for performing the RRM measurement on the neighboring cell by using the MR is greater than a measurement period for performing the RRM measurement on the neighboring cell by using the LR.

11. The method according to claim 10, further comprising:
performing the RRM measurement on the neighboring cell by using the MR during the RRM measurement on the neighboring cell performed by using the LR; or
performing the RRM measurement on the neighboring cell by using the MR when a measurement result of the RRM measurement on the neighboring cell performed by using the LR is below a threshold value.

12. The method according to any of claims 1 to 11, further comprising:
sending capability information to the network device, wherein the capability information indicates a capability of the terminal to perform the RRM measurement on the neighboring cell by using the LR.

13. The method according to claim 12, wherein the capability comprises at least one of:
a first capability of performing an LP-SS-based RRM measurement on the neighboring cell by using an OOK LR;
a second capability of performing the LP-SS-based RRM measurement on the neighboring cell by using an OFDM LR; or
a third capability of performing a PSS- or SSS-based RRM measurement on the neighboring cell by using the OFDM LR.

14. The method according to any of claims 1 to 13, wherein the neighboring cell is an intra-frequency neighboring cell or an inter-frequency neighboring cell of a serving cell of the terminal.

15. The method according to any of claims 1 to 13, wherein the first indication information is sent via broadcast information or via UE-specific signaling.

16. A communication method performed by a network device, comprising:
sending first indication information to a terminal, wherein the first indication information indicates whether the terminal uses an LR to perform an RRM measurement on a neighboring cell.

17. The method according to claim 16, wherein the method further comprises:
sending second indication information to the terminal, the second indication information indicating a reference signal used for the RRM measurement; or
the reference signal used for the RRM measurement is defined by a protocol; and
wherein the reference signal comprises at least one of LP-SS, PSS, or SSS.

18. The method according to claim 16 or 17, wherein the LR is an OOK LR supporting processing an OOK signal, or an OFDM LR supporting processing an OFDM modulated signal.

19. The method according to claim 18, wherein the first indication information indicates at least one of:
a terminal with the OOK LR performing an LP-SS-based RRM measurement;
a terminal with the OFDM LR performing the LP-SS-based RRM measurement; or
the terminal with the OFDM LR performing a PSS or SSS-based RRM measurement.

20. The method according to claim 19, wherein a frequency supported by the OFDM LR comprises a frequency of the PSS or a frequency of the SSS.

21. The method according to claim 19, wherein when the terminal is in an RRC idle state or an inactive state, the first indication information indicates that the terminal with the OOK LR performs the LP-SS-based RRM measurement, or that the terminal with the OFDM LR performs the LP-SS-based RRM measurement.

22. The method according to claim 16, further comprising:
sending third indication information to the terminal, wherein the third indication information indicates cell information of at least one neighboring cell to be measured by the LR,
wherein the cell information comprises at least one of a cell identifier, a cell index, or a cell frequency point.

23. The method according to any of claims 16 to 22, further comprising:
sending fourth indication information to the terminal, wherein the fourth indication information indicates whether the terminal uses an MR to perform the RRM measurement on the neighboring cell while performing the RRM measurement on the neighboring cell by using the LR.

24. The method according to claim 23, wherein a measurement period for performing the RRM measurement on the neighboring cell by using the MR is greater than a measurement period for performing the RRM measurement on the neighboring cell by using the LR.

25. The method according to any of claims 16 to 24, further comprising:
receiving capability information sent by the terminal, wherein the capability information indicates a capability of the terminal to perform the RRM measurement on the neighboring cell by using the LR.

26. The method according to claim 25, wherein the capability comprises at least one of:
a first capability of performing an LP-SS-based RRM measurement on the neighboring cell by using an OOK LR;
a second capability of performing the LP-SS-based RRM measurement on the neighboring cell by using an OFDM LR; or
a third capability of performing a PSS- or SSS-based RRM measurement on the neighboring cell by using the OFDM LR.

27. The method according to any of claims 16 to 26, wherein the neighboring cell is an intra-frequency neighboring cell or an inter-frequency neighboring cell of a serving cell of the terminal.

28. The method according to any of claims 16 to 26, wherein the first indication information is sent via broadcast information or via UE-specific signaling.

29. A terminal, comprising:
a transceiver module, configured to receive first indication information sent by a network device, wherein the first indication information indicates whether the terminal uses a low-power wake up receiver, LR, to perform a radio resource management, RRM, measurement on a neighboring cell.

30. A network device, comprising:
a transceiver module, configured to send first indication information to a terminal, wherein the first indication information indicates whether the terminal uses an LR to perform an RRM measurement on a neighboring cell.

31. A terminal, comprising:
one or more processors,
wherein the terminal is configured to perform the method according to any of claims 1 to 15.

32. A network device, comprising:
one or more processors,
wherein the network device is configured to perform the method according to any of claims 16 to 28.

33. A communication system, comprising a terminal and a network device, wherein:
the terminal is configured to perform the method according to any of claims 1 to 15; and
the network device is configured to perform the method according to any of claims 16 to 28.

34. A storage medium having instructions stored thereon that, when executed on a communication device, cause the communication device to perform the method according to any of claims 1 to 15 or any one of claims 16 to 28.

35. A computer program product, that when executed by a communication device, causes the communication device to perform the method according to any of claims 1 to 15 or any of claims 16 to 28.
